# EUROPEAN PATENT SPECIFICATION

(11) **EP 3 066 506 B1**
(45) Date of publication and mention of the grant of the patent: **06.11.2019**
(21) Application number: 13792626.7
(22) Date of filing: 08.11.2013
(51) Int. Cl.: G02B 6/44

(54) **ASSEMBLY FOR RETAINING AND SECURING AN OPTICAL CABLE AND RETAINING ELEMENT THEREFOR.**
ANORDNUNG ZUR BEFESTIGUNG UND SICHERUNG EINES OPTISCHEN KABELS UND HALTEELEMENT DAFÜR
ENSEMBLE PERMETTANT DE RETENIR ET D'IMMOBILISER UN CÂBLE À FIBRE OPTIQUE, ET ÉLÉMENT DE RETENUE ASSOCIÉ

(43) Date of publication of application: 14.09.2016
(73) Proprietor: Prysmian S.p.A., 20126 Milano (IT)
(72) Inventor: ABBIATI, Fabio, I-20126 Milano (IT)
(74) Representative: Perani & Partners S.p.A.
(86) International application number: PCT/EP2013/073343
(87) International publication number: WO 2015/067314

(56) References cited:
- EP-A2- 2 101 094
- WO-A1-2009/040566
- WO-A1-2010/092009
- WO-A2-2013/092220
- DE-U1-202006 012 234
- JP-A- 2007 232 947

## Description

### Field of the invention

The present invention relates to the field of equipments and components for the installation of optical cables in optical (access) networks. In particular, the present invention relates to an assembly for retaining and securing an optical cable.

### Background of the invention

A FTTH ("Fiber To The Home") network is an optical access network providing a number of end users with broadband communication services, i.e. with services requiring data transmission at a rate of some hundreds of Mbit/s or more.

Typically, a FTTH network comprises a distribution cabinet which cooperates with an access network and which is typically located in the basement of the building where the end users reside. An optical trunk cable, hereinafter referred to as "riser cable", exits the distribution cabinet and runs through the building from the basement up to all the building floors.

At each floor of the building, the riser cable may be optically connected to one or more optical cables, hereinafter referred to as "drop cables". Each drop cable is typically terminated at its far end by a respective customer optical termination box located within or in proximity of the apartment or office of an end user.

During installation of the optical termination box, the operator has to lay down the drop cable from a distribution cabinet to the apartment of the end user where the operator has to cut the drop cable and connect the optical fibers to optical connectors by means of optical fiber splices.

WO 2013/033279 discloses a removable strain relief bracket to secure a fiber optic cable to a fiber optic equipment. The strain relief bracket is removably attached to a mounting surface of the fiber optic equipment and comprises supporting surfaces projecting from the body. The supporting surfaces are surrounded by fasteners disposed around the fiber optic cable. The fasteners may be in the form of cable ties, tie-wraps, zip-tie or Velcro hook and loop fasteners.

WO 2011/076275 discloses an optical termination box and a drop cable with a first end housed in a first compartment of the termination box. The termination box has a fixing element with two retaining tabs protruding from the base of the termination box and mutually faced to define a seat where the optical cable can be accommodated. The seat defined between the two tabs is smaller than the diameter of the outer sheath of the optical cable so that the cable is retained between the two tabs.

JP2007232947 discloses a cable retaining element with an insertion port configured to allow side insertion of said cable and elastic portions configured to retain said cable.

### Summary of the invention

The Applicant has perceived that the use of fasteners proposed in WO 2013/033279 does not guarantee a secure retaining of the optical cable. Indeed, the fasteners can be easily removed from the supporting surfaces and can loosen. Further, in order to secure the fasteners to the supporting surfaces, the operator needs to keep the optical cable in position between the supporting surfaces and simultaneously let the fasteners pass through the supporting surfaces and close the fasteners. The mounting operation is therefore complicated and unreliable.

The Applicant has also perceived that the solution disclosed in WO 2011/076275 is space consuming and it does not guarantee a reliable retaining action without cable ties. As a matter of fact, the optical cable can come out from the seat of the optical cable if it is not fitted in the right manner.

In view of the above, the Applicant has tackled the problem of providing an assembly for retaining and securing optical cables of different diameters without cable ties, reducing the installation time and saving molding costs.

The Applicant has found that it is convenient to have an assembly for retaining and securing an optical cable comprising a retaining element with an opening configured to receive and axially hold the optical cable, and a housing with a mounting surface configured to receive the retaining element and transversally secure the optical cable.

Therefore, the present invention relates to an assembly for retaining and securing an optical cable, the assembly comprising a retaining element comprising a seat configured to receive said optical cable, an insertion port configured to allow side insertion of said optical cable in said seat, at least one elastic portion configured to act on the optical cable received in said seat for retaining said optical cable, and a housing with a mounting surface for removably attaching said retaining element to said housing, said mounting surface being configured to close said insertion port when the retaining element is attached to said mounting surface.

In order to guarantee easy installations, the insertion port is configured to allow insertion of the optical cable in said seat before the retaining element is attached to the mounting surface of the housing.

Advantageously, the seat extends along a longitudinal direction and the elastic portion is configured to elastically deform upon insertion of an optical cable in the seat and generate an elastic load along a direction transversal to the longitudinal direction and directed towards the optical cable.

In addition, the retaining element comprises a body with an inner surface and an outer surface, the inner surface delimiting said seat, and at least one retaining member joined to the inner surface and configured to act on the optical cable received in said seat.

Preferably, the elastic portion comprises the retaining member.

Preferably, the retaining member comprises an elastic arm projecting from the inner surface towards said seat.

Preferably, friction members are formed on the retaining member for retaining the optical cable passing through the openings.

Preferably, the retaining member extends between a base portion and a free end portion, the friction members being formed at the free end portion.

Preferably, the friction members comprise teeth formed at the free end portion to increase the grip of the retaining member on the optical cable received in the seat.

Preferably, the elastic portion comprises a portion of the body.

Advantageously, the body comprises two lateral walls and a transverse wall connecting the lateral walls, the elastic portion comprising at least one of two lateral walls.

Preferably, the elastic portion comprises the lateral walls, each lateral wall being elastically deformable relative to the transverse wall.

Preferably, the housing comprises guiding members formed on the mounting surface and coupled with the retaining element, the guiding members guiding the retaining element upon attaching the retaining element to the mounting surface.

Preferably, the guiding members are configured to act on the lateral walls of the retaining element so as to increase the action of the elastic portion on the optical cable received in the seat.

Preferably, the retaining element is movable between a released position, in which said retaining element is disengaged from the mounting surface, and an attached position, in which the retaining element is attached to the mounting surface, upon attaching the retaining element to the mounting surface the guiding members acting outside on the lateral walls.

Preferably, the guiding members comprise two guiding walls projecting from the mounting surface and embracing the lateral walls.

Preferably, each guiding wall comprises a rib cooperating with a slot formed on a corresponding lateral wall of the retaining element.

Preferably, the guiding members are provided with attaching members cooperating with the retaining element to removably attach the retaining element to the mounting surface.

Preferably, the attaching members comprise lugs formed on the guiding members cooperating with corresponding edges formed on the retaining element to keep the retaining element in position.

Preferably, the retaining element comprises two openings for passage of the optical cable and the seat and the insertion port extend between said two openings.

The present invention also relates to a retaining element for retaining an optical cable, the retaining element comprising a seat configured to receive the optical cable, an insertion port configured to allow side insertion of said optical cable in said seat and at least one elastic portion configured to act on the optical cable received in said seat for retaining said optical cable.

### Brief description of the drawings

The present invention will now be described in more detail hereinafter with reference to the accompanying drawings, in which some embodiments of the invention are shown. Drawings illustrating the embodiments are not-to-scale schematic representations.
FIG. 1 is a schematic representation of an assembly according to an embodiment of the present invention,

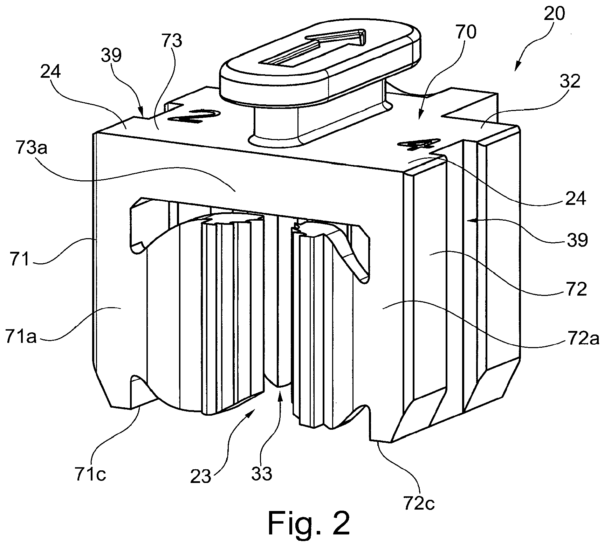

FIG. 2 is a schematic representation of the retaining element of the assembly of FIG. 1,

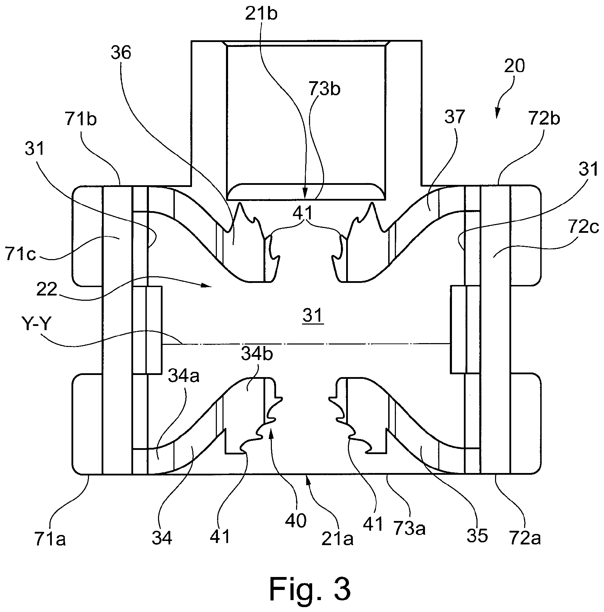

FIG. 3 is a plan view of the retaining element of FIG. 2,

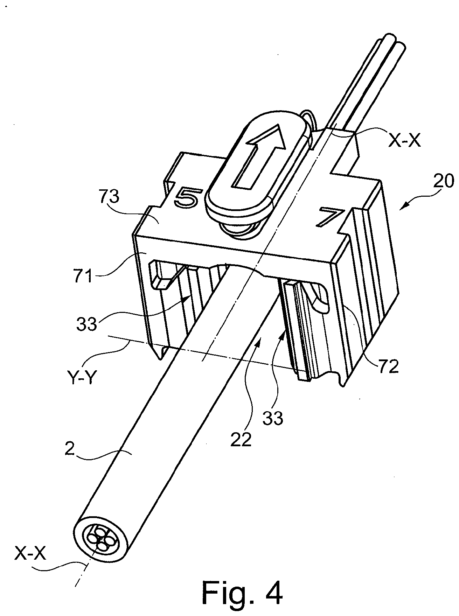

FIG. 4 is a schematic representation of the retaining element of FIG. 2 retaining an optical cable,

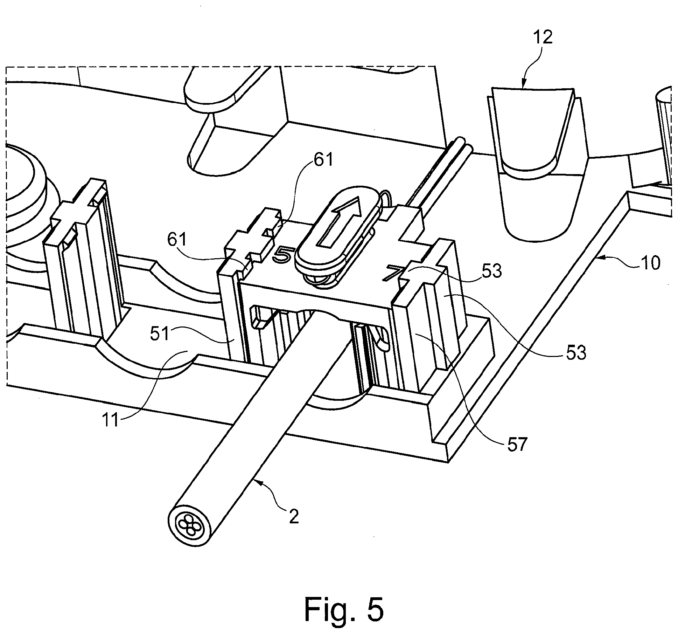

FIG. 5 is a schematic representation of the retaining element of FIG. 2 retaining an optical cable and attached to a housing.

### Detailed description

For the purposes of the present description and claims an optical cable is deemed to be any optical cable comprising one or more optical fiber units, an outer sheat and, optionally, flexible strength members.

A fiber unit is defined as an assembly comprising one (or more) optical fiber(s) which is constituted by a glass core, a glass cladding, a single or dual coating layer and an outer layer surrounding the said one (or more) optical fiber(s) in order to protect the overall optical fiber(s) from damage.

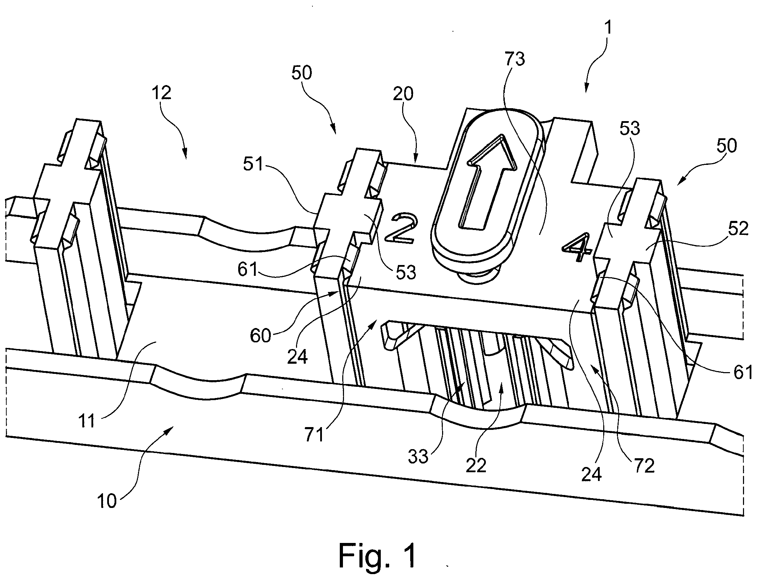

Figure 1 shows a diagrammatic view of an assembly 1 for retaining an optical cable 2.

The assembly 1 comprises a housing 10 with a mounting surface 11 and a retaining element 20 removably attached to the mounting surface 11.

In this embodiment, the housing 10 is part of an optical equipment 12 , in the example an optical distribution box.

The retaining element 20 comprises two openings 21a, 21b for passage of the optical cable 2, a seat 22 and an insertion port 23.

The two openings 21a, 21b will be also indicated here below as first opening 21a and second opening 21b.

The seat 22 extends along a longitudinal direction X-X between the two openings 21a, 21b and is configured to receive the optical cable 2 passing through the two openings 21a, 21b.

The two openings 21a, 21b define an entrance opening and an exit opening of the seat 22. In the attached Figures, the first opening 21a defines the entrance opening and the second opening 21b defines the exit opening.

The insertion port 23 extends between the two openings 21a, 21b and is configured to allow insertion of the optical cable 2 in the seat 22 before the retaining element 20 is attached to the mounting surface 11.

The retaining element 20 is movable between a released position, in which the retaining element 20 is disengaged from the mounting surface 11, and an attached position, in which the retaining element 20 is attached to the mounting surface 11.

Therefore, the insertion port 23 allows insertion of the optical cable 2 in the seat 22 when the retaining element 20 is in the released position.

In the attached position, the mounting surface 11 closes the insertion port 23. In this attached position, the optical cable 2 received in the seat 22 comes out from the retaining element 20 at opposite sides through the two openings 21a, 21b and is surrounded, preferably fully surrounded, by the retaining element 20 and the mounting surface 11.

Thanks to this configuration, therefore it is possible to secure the optical cable with respect to the housing 10.

The retaining element 20 has at least one elastic portion configured to act on the optical cable 2 received in the seat 22 to retain the optical cable in said seat 22.

Thanks to the provision of an elastic portion, the effective area made available by the seat 22 to receive the optical cable 2 may vary to allow the retaining element 20 to receive optical cables with different diameters. Moreover, the elastic portion guarantees a sufficient retaining action on the optical cable 2 received in the seat 22 before the retaining element 20 is attached to the mounting surface 11. This, in turns, reduces the installation time and saves moulding costs.

Upon insertion of the optical cable 2 in the seat 22, the elastic portion elastically deforms and generates an elastic retention load acting on the optical cable 2 along a direction Y-Y transversal to the longitudinal direction X-X.

Preferably, the direction Y-Y is perpendicular to the longitudinal direction X-X.

More preferably, the direction Y-Y lies on a plane parallel to the plane defined by the insertion port 23.

According to one embodiment, the retaining element 20 comprises a body 70 with an inner surface 31 and an outer surface 32. The inner surface 31 delimits the seat 22 and the outer surface 32 is able to be grasped by a user to attach the retaining element 20 to the mounting surface 11 and release it from the mounting surface 11.

Retaining members 33 are joined to the inner surface 31 and are configured to act on the optical cable 2 received in the seat 22.

The elastic portion may comprise the retaining members 33 and/or a portion of the body 70.

In the embodiment shown in the attached Figures, the retaining members 33 comprise four retaining members 34,35,36,37 and each retaining member comprises an elastic arm projecting from the inner surface 31 of the body 70 towards the seat 22.

In particular, the four retaining members 34,35,36,37 comprise a first couple of elastic arms 34,35 positioned at the first opening 21a and a second couple of elastic arms 36,37 positioned at the second opening 21b. Each couple of elastic arms, for example the couple of elastic arms 34,35, comprises two elastic arms 34,35 formed on opposite sides of the body 70 and projecting from the inner surface 31 so as to face each other.

Each elastic arm, for example the elastic arm 34, extends between a base portion 34a, joined to the inner surface 31, and a free end portion 34b adapted to act on the optical cable 2.

Preferably, friction members 40 are formed on the retaining members 33 to increase the grip of the retaining members 33 on the optical cable 2 received in the seat 22.

Preferably, the friction members 40 comprise teeth 41 formed at the free end portion of the elastic arms, for example at the free end portion 34b of the elastic arm 34.

The teeth 41 formed on the retaining members 34, 35 positioned at the first opening 21a are so oriented to constrain longitudinally the optical cable 2 in a first way and the teeth 41 formed on the retaining members 36, 37 positioned at the second opening 21b are so oriented to constrain longitudinally the optical cable 2 in a second way opposite to the first way. Preferably, the first way is the way out of the optical equipment 12.

In the embodiment shown in the attached Figures, the body 70 comprises two lateral walls 71, 72 and a transverse wall 73 connecting the two lateral walls 71, 72.

At least one of the two lateral walls 71,72 is elastically deformable relative to the transverse wall 73. This improves the retaining action of the retaining element 20 on the optical cable 2 received in the seat 22, both in the released position and in the attached position.

Preferably, the two lateral walls 71, 72 are elastically deformable relative to the transverse wall 73.

The two lateral walls 71,72 have respective first lateral edges 71a, 72a, second lateral edges 71b, 72b and lower edges 71c, 72c.

The transverse wall 73 has a first transverse edge 73a and a second transverse edge 73b.

The lower edges 71c, 72c delimit the insertion port 23.

The first lateral edges 71a, 72a and the first transverse edge 73a delimit the first opening 21a.

The second lateral edges 71b, 72b and the second transverse edge 73b delimit the second opening 21b.

In the embodiment shown in the Figures, the two lateral walls 71, 72 and the transverse wall 73 define a bridge-shaped body 70. However, the body 70 may have a different shape such as a split annular shape.

Advantageously, the housing 10 comprises guiding members 50 formed on the mounting surface 11 and coupled with the retaining element 20 for guiding the retaining element 20 upon attaching the retaining element 20 to the mounting surface 11.

The guiding members 50 are configured to act outside on the retaining element 20 so as to increase the action of the elastic portions of the retaining element 20 on the optical cable 2 received in the seat 22.

In the embodiment shown in the Figures, upon attaching the retaining element 20 to the mounting surface 11, the guiding members 50 act outside on the two lateral walls 71, 72.

Preferably, the guiding members 50 comprise two guiding walls 51,52 projecting from the mounting surface 11 and embracing the two lateral walls 71, 72 of the retaining element 20. The action of the two guiding walls 51, 52 on the two lateral walls 71, 72 allows to recover at least partially the elastic deformation which the elastic portions of the retaining element 20 undergo upon insertion of the optical cable 2 in the seat 22 in the released position and to transform this recovered elastic deformation in an increase of the action of the elastic portions, particularly of the retaining members 33, on the optical cable 2.

Preferably, each guiding wall, for example the guiding wall 51, comprises a rib 53 cooperating with a slot 39 formed on a corresponding lateral wall, for example the lateral wall 71, of the retaining element 20. The rib 53 is formed on the inner surface of the guiding wall 51 and the slot 39 is formed on the outer surface of the lateral wall 71. The rib has the task to transfer the longitudinal load from the cable 2 and the retaining element 20 to the housing 10.

The guiding members 50 are provided with attaching members 60 cooperating with the retaining element 20 to removably attach the retaining element 20 to the mounting surface 11.

In this embodiment, the attaching members 60 comprise lugs 61 formed on the guiding members 50. The lugs 61 cooperate with corresponding edges 24 formed on the retaining element 20 for locking the latter with respect the housing 10. Preferably, the edges 24 are formed at the upper end of the retaining element 20.

In the embodiment shown in the attached Figures, the housing 10 comprises a plurality of guiding members 50 disposed side by side and spaced one another. Each guiding wall 51, 52 comprises two opposite ribs 53 cooperating with slots 39 of two adjacent, contiguous retaining elements 20. In this manner, it is possible to receiving a plurality of retaining elements 20 in a small area where the action of the different guiding walls 51, 52 on the lateral walls 71, 72 allows recovering of the elastic deformation of two contiguous retaining elements 20.

Use of the assembly it will be described here below.

In the released position, a user grasps the retaining element 20 and inserts the optical cable 2 in the seat 22 through the insertion port 23.

As soon as the optical cable 2 engages the elastic members 33, the elastic members 33 elastically bend with respect to the lateral walls 71, 72 as a consequence of the action made by the user against the elastic load of the elastic members 33. Depending on the relative amount of elasticity of the elastic members 33 and the lateral walls 71, 72 of the body 70, the lateral walls 71, 72 undergo an elastic bending with respect to the transverse wall 73. The optical cable 2 is so sufficiently retained by the retaining element 20 in order to avoid the optical cable 2 to be released from the seat 22.

The user may then attach the retaining element 20 to the housing 10. To this purpose, the user holds the retaining element 20 and, possibly increasing the action of the elastic portions on the optical cable 2 to let the lateral walls 71, 72 to penetrate between the guiding walls 51, 52, inserts the lateral walls 71, 72 of the the retaining element 20 between the guiding walls 51, 52 of the housing 10. The rib 53 and the slot 39 make easier the positioning of the retaining element 20 with respect to the guiding walls 51, 52. When the lugs 61 snap over the edges 24 and engage above the edges 24, the retaining element 20 becomes attached to the mounting surface 11.

Removal of the retaining element 20 is achieved by pushing outwardly the lugs 61 until they disengage the edges 24 and slipping the retaining element 20 off the guiding walls 51, 52.

## Claims

1. An assembly (1) for retaining and securing an optical cable (2), said assembly (1) comprising:
- a retaining element (20) comprising:
- a seat (22) configured to receive said optical cable (2),
- an insertion port (23) configured to allow side insertion of said optical cable (2) in said seat (22),
- at least one elastic portion configured to act on the optical cable (2) received in said seat (22) for retaining said optical cable (2),
- two openings (21a,21b) for passage of said optical cable (2), said seat (22) and said insertion port (23) extending between said two openings (21a,21b);
- a housing (10) with a mounting surface (11) for removably attaching said retaining element (20) to said housing (10), **characterized in that** said mounting surface (11) is configured to close said insertion port (23) when the retaining element (20) is attached to said mounting surface (11) for securing said optical cable (2) with respect to said housing (10).

2. The assembly (1) according to claim 1, wherein said insertion port (23) is configured to allow insertion of an optical cable (2) in said seat (22) before said retaining element (20) is attached to said mounting surface (11).

3. The assembly (1) according to claim 1 or 2, wherein:
- said seat (22) extends along a longitudinal direction (X-X),
- said at least one elastic portion is configured to elastically deform upon insertion of an optical cable (2) in said seat (22) and generate an elastic load along a direction (Y-Y) transversal to the longitudinal direction (X-X) and directed towards the optical cable (2).

4. The assembly (1) according to any of claims 1-3, wherein said retaining element (20) comprises:
- a body (70) with an inner surface (31) and an outer surface (32), said inner surface (31) delimiting said seat (22),
- at least one retaining member (33) joined to said inner surface (31) and configured to act on the optical cable (2) received in said seat (22).

5. The assembly (1) according to claim 4, wherein said at least one elastic portion comprises said at least one retaining member (33).

6. The assembly (1) according to claim 4 or 5, wherein friction members (40) are formed on said at least one retaining member (33) for retaining the optical cable (2) passing through said seat (22).

7. The assembly (1) according to claim 6, wherein said at least one retaining member (33) extends between a base portion (34a) and a free end portion (34b), said friction members (40) being formed at said free end portion (34b).

8. The assembly (1) according to any of claims 4-7, wherein said at least one elastic portion comprises a portion of said body (70).

9. The assembly (1) according to claim 8, wherein said body (70) comprises two lateral walls (71, 72) and a transverse wall (73) connecting said two lateral walls (71, 72), said at least one elastic portion comprising at least one of said two lateral walls (71, 72).

10. The assembly (1) according to claim 9, wherein said at least one elastic portion comprises said two lateral walls (71, 72), each lateral wall being elastically deformable relative to said transverse wall (73).

11. The assembly (1) according to any of the preceding claims, wherein said housing (10) comprises guiding members (50) formed on said mounting surface (11) and coupled with said retaining element (20), said guiding members (50) guiding said retaining element (20) upon attaching said retaining element (20) to said mounting surface (11).

12. The assembly (1) according to claims 10 and 11, wherein said guiding members (50) are configured to act on the lateral walls (71, 72) of said retaining element (20) so as to increase the action of said at least one elastic portion on the optical cable (2) received in said seat (22).

13. The assembly (1) according to any of claims 9-12, wherein said retaining element (20) is movable between a released position, in which said retaining element (20) is disengaged from said mounting surface (11), and an attached position, in which said retaining element (20) is attached to said mounting surface (11), upon attaching said retaining element (20) to said mounting surface (11) said guiding members (50) acting outside on said two lateral walls (71, 72).

14. The assembly (1) according to any of claims 11-13, wherein said guiding members (50) are provided with attaching members (60) cooperating with said retaining element (20) to removably attach said retaining element (20) to said mounting surface (11).

15. The assembly (1) according to claim 14, wherein said attaching members (60) comprise lugs (61) formed on said guiding members (50), said lugs (61) cooperating with corresponding edges (24) formed on said retaining element (20).

## Patentansprüche

1. Anordnung (1) zum Halten und Sichern eines Lichtleiterkabels (2), wobei die Anordnung (1) umfasst:
- ein Halte-Element (20), das umfasst:
- eine Aufnahme (22), die zum Aufnehmen des Lichtleiterkabels (2) ausgeführt ist,
- einen Einführungs-Kanal (23), der so ausgeführt ist, dass er seitliche Einführung des Lichtleiterkabels (2) in die Aufnahme (22) zulässt,
- wenigstens einen elastischen Abschnitt, der so ausgeführt ist, dass er auf das in der Aufnahme (22) aufgenommene Lichtleiterkabel (2) zum Halten des optischen Lichtleiterkabel (2) einwirkt,
- zwei Öffnungen (21a, 21b) zum Durchführen des Lichtleiterkabels (2), wobei sich die Aufnahme (22) und der Einführungs-Kanal (23) zwischen den zwei Öffnungen (21a, 21b) erstrecken;
- ein Gehäuse (10) mit einer Anbringungsfläche (11) zum lösbaren Anbringen des Halte-Elementes (20) an dem Gehäuse (10), **dadurch gekennzeichnet, dass** die Anbringungsfläche (11) so ausgeführt ist, dass der Einführungs-Kanal (23) verschlossen wird, wenn das Halte-Element (20) an der Anbringungsfläche (11) angebracht wird, um das Lichtleiterkabel (2) in Bezug auf das Gehäuse (10) zu sichern.

2. Anordnung (1) nach Anspruch 1, wobei der Einführungs-Kanal (23) so ausgeführt ist, dass er Einführen eines Lichtleiterkabels (2) in die Aufnahme (22) vor Anbringen des Halte-Elementes (20) an der Anbringungsfläche (11) zulässt.

3. Anordnung (1) nach Anspruch 1 oder 2, wobei:
- die Aufnahme (22) sich in einer Längsrichtung (X-X) erstreckt,
- der wenigstens eine elastische Abschnitt so ausgeführt ist, dass er sich bei Einführung eines Lichtleiterkabels (2) in die Aufnahme (22) elastisch verformt und eine elastische Spannung in einer Richtung (Y-Y) quer zu der Längsrichtung (X-X) und auf das Lichtleiterkabel (2) zu gerichtet erzeugt.

4. Anordnung (1) nach einem der Ansprüche 1-3, wobei das Halte-Element (20) umfasst:
- einen Körper (70) mit einer Innenfläche (31) und einer Außenfläche (32), wobei die Innenfläche (31) die Aufnahme (22) begrenzt,
- wenigstens ein Halte-Element (33), das mit der Innenfläche (31) verbunden und so ausgeführt ist, dass es auf das in der Aufnahme (22) aufgenommene Lichtleiterkabel (2) einwirkt.

5. Anordnung (1) nach Anspruch 4, wobei der wenigstens eine elastische Abschnitt das wenigstens eine Halte-Element (33) umfasst.

6. Anordnung (1) nach Anspruch 4 oder 5, wobei Reibungsglieder (40) an dem wenigstens einen Halte-Element (33) zum Halten des durch die Aufnahme (22) hindurchgeführten Lichtleiterkabels (2) ausgebildet sind

7. Anordnung (1) nach Anspruch 6, wobei sich das wenigstens eine Halte-Element (33) zwischen einem Basisabschnitt (34a) und einem freien Endabschnitt (34b) erstreckt, und wobei die Reibungsglieder (40) an dem freien Endabschnitt (34b) ausgebildet sind.

8. Anordnung (1) nach einem der Ansprüche 4-7, wobei der wenigstens eine elastische Abschnitt einen Abschnitt des Körpers (70) umfasst.

9. Anordnung (1) nach Anspruch 8, wobei der Körper (70) zwei Seitenwände (71, 72) sowie eine die zwei Seitenwände (71, 72) verbindende Querwand (73) umfasst und der wenigstens eine elastische Abschnitt wenigstens eine der zwei Seitenwände (71, 72) umfasst.

10. Anordnung (1) nach Anspruch 9, wobei der wenigstens eine elastische Abschnitt die zwei Seitenwände (71, 72) umfasst und jede Seitenwand in Bezug auf die Querwand (73) elastisch verformt werden kann.

11. Anordnung (1) nach einem der vorangehenden Ansprüche, wobei das Gehäuse (10) Führungsglieder (50) umfasst, die an der Anbringungsfläche (11) ausgebildet und mit dem Halte-Element (20) gekoppelt sind, wobei die Führungsglieder (50) das Halte-Element (20) beim Anbringen des Halte-Elementes (20) an der Anbringungsfläche (11) führen.

12. Anordnung (1) nach den Ansprüchen 10 und 11, wobei die Führungsglieder (50) so ausgeführt sind, dass sie auf die Seitenwände (71, 72) des Halte-Elementes (20) einwirken, um so die Wirkung des wenigstens einen elastischen Abschnitts auf das in der Aufnahme (22) aufgenommene Lichtleiterkabel (2) zu verstärken.

13. Anordnung (1) nach einem der Ansprüche 9-12, wobei das Halte-Element (20) zwischen einer freigegebenen Position, in der das Halte-Element (20) von der Anbringungsfläche (11) gelöst ist, und einer angebrachten Position bewegt werden kann, in der das Halte-Element (20) an der Anbringungsfläche (11) angebracht ist, und nach Anbringen des Halte-Elementes (20) an der Anbringungsfläche (11) die Führungsglieder (50) außen auf die zwei Seitenwände (71, 72) einwirken.

14. Anordnung (1) nach einem der Ansprüche 11-13, wobei die Führungsglieder (50) mit Anbringungsgliedern (60) versehen sind, die mit dem Halte-Element (20) zum abnehmbaren Anbringen des Halte-Elementes (20) an der Anbringungsfläche (11) zusammenwirken

15. Anordnung (1) nach Anspruch 14, wobei die Anbringungsglieder (60) Laschen (61) umfassen, die an den Führungsgliedern (50) ausgebildet sind, und die Laschen (61) mit entsprechenden an dem Halte-Element (20) ausgebildeten Kanten (24) zusammenwirken.

## Revendications

1. Ensemble (1) permettant de retenir et d'immobiliser un câble optique (2), ledit ensemble (1) comprenant :
- un élément de retenue (20) comprenant :
- un siège (22) configuré pour recevoir ledit câble optique (2),
- un orifice d'insertion (23) configuré pour permettre l'insertion latérale dudit câble optique (2) dans ledit siège (22),
- au moins une partie élastique configurée pour agir sur le câble optique (2) reçu dans ledit siège (22) pour retenir ledit câble optique (2),
- deux ouvertures (21a, 21b) pour le passage dudit câble optique (2), ledit siège (22) et ledit orifice d'insertion (23) s'étendant entre lesdites deux ouvertures (21a, 21b);
- un boîtier (10) ayant une surface de montage (11) pour fixer de manière amovible ledit élément de retenue (20) audit boîtier (10), **caractérisé en ce que** ladite surface de montage (11) est configurée pour fermer ledit orifice d'insertion (23) lorsque l'élément de retenue (20) est fixé à ladite surface de montage (11) pour immobiliser ledit câble optique (2) par rapport audit boîtier (10).

2. Ensemble (1) selon la revendication 1, dans lequel ledit orifice d'insertion (23) est configuré pour permettre l'insertion d'un câble optique (2) dans ledit siège (22) avant que ledit élément de retenue (20) soit fixé à ladite surface de montage (11).

3. Ensemble (1) selon la revendication 1 ou 2, dans lequel :
- ledit siège (22) s'étend le long d'une direction longitudinale (X-X),
- ladite au moins une partie élastique est configurée pour se déformer élastiquement lors de l'insertion d'un câble optique (2) dans ledit siège (22) et générer une charge élastique le long d'une direction (Y-Y) transversale à la direction longitudinale (X-X) et orientée en direction du câble optique (2).

4. Ensemble (1) selon l'une quelconque des revendications 1 à 3, dans lequel l'élément de retenue (20) comprend :
- un corps (70) ayant une surface interne (31) et une surface externe (32), ladite surface interne (31) délimitant ledit siège (22),
- au moins un organe de retenue (33) relié à ladite surface interne (31) et configuré pour agir sur le câble optique (2) reçu dans ledit siège (22).

5. Ensemble (1) selon la revendication 4, dans lequel ladite au moins une partie élastique comprend ledit au moins un organe de retenue (33).

6. Ensemble (1) selon la revendication 4 ou 5, dans lequel des organes de friction (40) sont formés sur ledit au moins un organe de retenue (33) pour retenir le câble optique (2) passant à travers ledit siège (22).

7. Ensemble (1) selon la revendication 6, dans lequel ledit au moins un organe de retenue (33) s'étend entre une partie de base (34a) et une partie d'extrémité libre (34b), lesdits organes de friction (40) étant formés au niveau de ladite partie d'extrémité libre (34b).

8. Ensemble (1) selon l'une quelconque des revendications 4 à 7, dans lequel ladite au moins une partie élastique comprend une partie dudit corps (70).

9. Ensemble (1) selon la revendication 8, dans lequel ledit corps (70) comprend deux parois latérales (71, 72) et une paroi transversale (73) raccordant lesdites deux parois latérales (71, 72), ladite au moins une partie élastique comprenant au moins l'une desdites deux parois latérales (71, 72).

10. Ensemble (1) selon la revendication 9, dans lequel ladite au moins une partie élastique comprend lesdites deux parois latérales (71, 72), chaque paroi latérale étant élastiquement déformable par rapport à ladite paroi transversale (73).

11. Ensemble (1) selon l'une quelconque des revendications précédentes, dans lequel ledit boîtier (10) comprend des organes de guidage (50) formés sur ladite surface de montage (11) et couplés audit élément de retenue (20), lesdits organes de guidage (50) guidant ledit élément de retenue (20) lors de la fixation dudit élément de retenue (20) à ladite surface de montage (11).

12. Ensemble (1) selon les revendications 10 et 11, dans lequel lesdits organes de guidage (50) sont configurés pour agir sur les parois latérales (71, 72) dudit élément de retenue (20) afin d'accroître l'action de ladite au moins une partie élastique sur le câble optique (2) reçu dans ledit siège (22).

13. Ensemble (1) selon l'une quelconque des revendications 9 à 12, dans lequel ledit élément de retenue (20) est mobile entre une position libérée, dans laquelle ledit élément de retenue (20) est désolidarisé de ladite surface de montage (11) et une position fixée, dans laquelle ledit élément de retenue (20) est fixé à ladite surface de montage (11), lors de la fixation dudit élément de retenue (20) à ladite surface de montage (11), lesdits organes de guidage (50) agissant à l'extérieur sur lesdites deux parois latérales (71, 72).

14. Ensemble (1) selon l'une quelconque des revendications 11 à 13, dans lequel lesdits organes de guidage (50) sont munis d'organes de fixation (60) coopérant avec ledit élément de retenue (20) pour fixer de manière amovible ledit élément de retenue (20) à ladite surface de montage (11).

15. Ensemble (1) selon la revendication 14, dans lequel lesdits organes de fixation (60) comprennent des ergots (61) formées sur lesdits organes de guidage (50), lesdites ergots (61) coopérant avec des bords correspondants (24) formés sur ledit élément de retenue (20).
